# EUROPEAN PATENT APPLICATION

(11) **EP 4 763 535 A1**
(43) Date of publication of application: **24.06.2026**
(21) Application number: 25221814.4
(22) Date of filing: 09.12.2025
(51) Int. Cl.: B60C 9/22, B60C 9/28, B60C 9/26

(54) **REDUCED WEIGHT AIRCRAFT TIRE**

(30) Priority: 18.12.2024 US 202463735701 P; 12.11.2025 US 202519386676
(71) Applicant: The Goodyear Tire & Rubber Company, Akron, OH 44316 (US)
(72) Inventor: Kmiecik, Frank Anthony, Akron, 44316 (US)
(74) Representative: Kutsch, Bernd

(57) **Abstract**

A pneumatic tire (8) is disclosed comprising a tread (12), a carcass (30) positioned radially inward of the tread (12) and comprising a carcass ply (34a) having a first concave portion, and a belt structure (40) positioned radially inward of the tread (12) and radially outward of the carcass (30) and comprising a belt ply (44a) having a second concave portion. A radial distance (d₁) is constant or substantially constant between the carcass ply (34a) and the belt ply (44a), including the first and second concave portions, respectively.

## Description

### Technical Field

The present invention relates to pneumatic tires having a carcass and a belt reinforcing structure, more particularly to a carcass and a belt reinforcing structure for a high-speed, heavy load tire for an aircraft.

### Background

Pneumatic tires for high-speed applications experience a high degree of flexure in a crown area of the tire as the tire enters and leaves the area of the footprint. This problem is particularly exacerbated on aircraft tires, wherein such tires can reach a speed of over 200 miles per hour at takeoff and landing.

When a tire spins at very high speeds the crown area tends to grow radially outwardly due to the high angular accelerations and velocity. When an amount of growth of the crown area becomes greater than opposite shoulder portions of the tire, a diameter difference of the tire may be generated. This diameter difference may cause a drag phenomenon to the rotating tire. As a result, the shoulder areas of the tread may wear sooner than the crown area of the tread thereby shortening the life of the tread and the tire. This phenomenon is called deviated wear.

In order to enhance the wearing characteristics of the tread by suppressing the growing deformation thereof, a conventional radial tire may include a belt structure disposed between a tread rubber layer and a carcass of a crown region. The belt structure may restrain growing deformation of the crown region of the tread.

Current tire design drivers are an aircraft tire capable of high speed, high load and with reduced weight. Further, there is generally a tradeoff between load capacity and weight. Thus, an improved aircraft tire is needed, which is capable of meeting high speeds and high loads and with reduced weight.

### Definitions

"Apex" means an elastomeric filler located radially above the bead core and between the plies and the turnup ply.

"Annular" means formed like a ring.

"Aspect ratio" means the ratio of a tire section height to its section width.

"Aspect ratio of a bead cross-section" means the ratio of a bead section height to its section width.

"Asymmetric tread" means a tread that has a tread pattern not symmetrical about the center plane or equatorial plane (EP) of the tire.

"Axial" and "axially" refer to lines or directions that are parallel to the axis of rotation of the tire.

"Bead" means that part of the tire comprising an annular tensile member wrapped by one or more ply cords and shaped, with or without other reinforcement elements such as flippers, chippers, apexes, toe guards and chafers, to fit the design rim.

"Belt structure" means one layer or at least two annular layers or plies of parallel cords, woven or unwoven, underlying the tread, unanchored to the bead, and having cords preferably inclined respect to the equatorial plane (EP) of the tire. The belt structure may also include plies of parallel cords inclined at relatively low angles, acting as restricting layers.

"Bias tire" (cross ply) means a tire in which the reinforcing cords in the carcass ply extend diagonally across the tire from bead to bead at a 25° to 65° angle with respect to equatorial plane (EP) of the tire. If multiple plies are present, the ply cords preferably run at opposite angles in alternating layers.

"Breakers" means at least two annular layers or plies of parallel reinforcement cords having the same angle with reference to the equatorial plane (EP) of the tire as the parallel reinforcing cords in carcass plies. Breakers are usually associated with bias tires.

"Cable" means a cord formed by twisting together two or more plied yarns.

"Carcass" means the tire structure apart from the belt structure, tread, undertread, and sidewall rubber over the plies, but including the beads.

"Casing" means the carcass, belt structure, beads, sidewalls and all other components of the tire excepting the tread and undertread, i.e., the whole tire.

"Chipper" refers to a narrow band of fabric or steel cords located in the bead area whose function is to reinforce the bead area and stabilize the radially inwardmost part of the sidewall.

"Circumferential" and "circumferentially" mean lines or directions extending along the perimeter of the surface of the annular tire parallel to the equatorial plane (EP) and perpendicular to the axial direction; it can also refer to the direction of the sets of adjacent circular curves whose radii define the axial curvature of the tread, as viewed in cross section.

"Concave" means a specific curvature in a tire structure, where a tire structure curves inward toward a centerline of the tire in a ground contacting area. This inward curvature creates a concave profile when viewed across a cross-section of the tire.

"Convex" means a specific curvature in a tire structure, where a tire structure curves outward from a centerline of the tire in a ground contacting area. This outward curvature creates a convex profile when viewed across a cross-section of the tire.

"Cord" means one of the reinforcement strands which the reinforcement structures of the tire comprise.

"Cord angle" means the acute angle, left or right in a plan view of the tire, formed by a cord with respect to the equatorial plane (EP). The "cord angle" is measured in a cured but uninflated tire.

"Crown" means that portion of the tire within the width limits of the tire tread.

"Denier" means the weight in grams per 9,000 meters (unit for expressing linear density). "Dtex" means the weight in grams per 10,000 meters.

"Density" means weight per unit length.

"Elastomer" means a resilient material capable of recovering size and shape after deformation.

"Equatorial plane (EP)" means the plane perpendicular to the tire's axis of rotation and passing through the center of its tread; or the plane containing the circumferential centerline of the tread.

"Fabric" means a network of essentially unidirectionally extending cords, which may be twisted, and which in turn are composed of a plurality of a multiplicity of filaments (which may also be twisted) of a high modulus material.

"Fiber" is a unit of matter, either natural or man-made that forms the basic element of filaments. Characterized by having a length at least 100 times its diameter or width.

"Filament count" means the number of filaments that make up a yarn. Example: 1000 denier polyester has approximately 190 filaments.

"Flipper" refers to a reinforcing fabric around the bead wire for strength and to tie the bead wire in the tire body.

"Footprint" means the contact patch or area of contact of the tire tread with a flat surface at zero speed and under normal load and pressure.

"Gauge" refers generally to a measurement, and specifically to a thickness measurement.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"High Tensile Steel (HT)" means a carbon steel with a tensile strength of at least 3400 MPa at 0.20 mm filament diameter.

"Inner" means toward the inside of the tire and "outer" means toward its exterior.

"Innerliner" means the layer or layers of elastomer or other material that form the inside surface of a tubeless tire and that contain the inflating fluid within the tire.

"Inboard side" means the side of the tire nearest the vehicle when the tire is mounted on a wheel and the wheel is mounted on the vehicle.

"LASE" is load at specified elongation.

"Lateral" means an axial direction.

"Lay length" means the distance at which a twisted filament or strand travels to make a 360 degree rotation about another filament or strand.

"Load range" means load and inflation limits for a given tire used in a specific type of service as defined by tables in The Tire and Rim Association, Inc.

"Mega tensile steel (MT)" means a carbon steel with a tensile strength of at least 4500 MPa at 0.20 mm filament diameter.

"Net contact area" means the total area of ground contacting elements between defined boundary edges divided by the gross area between the boundary edges as measured around the entire circumference of the tread.

"Net-to-gross ratio" means the total area of ground contacting tread elements between lateral edges of the tread around the entire circumference of the tread divided by the gross area of the entire circumference of the tread between the lateral edges.

"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning.

"Normal load" means the specific design inflation pressure and load assigned by the appropriate standards organization for the service condition for the tire.

"Normal tensile steel (NT)" means a carbon steel with a tensile strength of at least 2800 MPa at 0.20 mm filament diameter.

"Outboard side" means the side of the tire farthest away from the vehicle when the tire is mounted on a wheel and the wheel is mounted on the vehicle.

"Ply" means a cord-reinforced layer of rubber-coated radially deployed or otherwise parallel cords.

"Radial" and "radially" mean directions radially toward or away from the axis of rotation of the tire.

"Radial ply structure" means the one or more carcass plies or which at least one ply has reinforcing cords oriented at an angle of between 65° and 90° with respect to the equatorial plane (EP) of the tire.

"Radial ply tire" means a belted or circumferentially-restricted pneumatic tire in which at least one ply has cords which extend from bead to bead are laid at cord angles between 65° and 90° with respect to the equatorial plane (EP) of the tire.

"Rib" means a circumferentially extending strip of rubber on the tread which is defined by at least one circumferential groove and either a second such groove or a lateral edge, the strip being laterally undivided by full-depth grooves.

"Rivet" means an open space between cords in a layer.

"Section height" means the radial distance from the nominal rim diameter to the outer diameter of the tire at its equatorial plane (EP).

"Section width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Self-supporting run-flat" means a type of tire that has a structure wherein the tire structure alone is sufficiently strong to support the vehicle load when the tire is operated in the uninflated condition for limited periods of time and limited speed. The sidewall and internal surfaces of the tire may not collapse or buckle onto themselves due to the tire structure alone (e.g., no internal structures).

"Sidewall insert" means elastomer or cord reinforcements located in the sidewall region of a tire. The insert may be an addition to the carcass reinforcing ply and outer sidewall rubber that forms the outer surface of the tire.

"Sidewall" means that portion of a tire between the tread and the bead.

"Sipe" or "incision" means small slots molded into the tread elements of the tire that subdivide the tread surface and improve traction; sipes may be designed to close when within the contact patch or footprint, as distinguished from grooves.

"Spring rate" means the stiffness of tire expressed as the slope of the load deflection curve at a given pressure.

"Stiffness ratio" means the value of a control belt structure stiffness divided by the value of another belt structure stiffness when the values are determined by a fixed three point bending test having both ends of the cord supported and flexed by a load centered between the fixed ends.

"Super tensile steel (ST)" means a carbon steel with a tensile strength of at least 3650 MPa at 0.20 mm filament diameter.

"Tenacity" is stress expressed as force per unit linear density of the unstrained specimen (gm/tex or gm/denier). Used in textiles.

"Tensile" is stress expressed in forces/cross-sectional area. Strength in psi=12,800 times specific gravity times tenacity in grams per denier.

"Toe guard" refers to the circumferentially deployed elastomeric rim-contacting portion of the tire axially inward of each bead.

"Tread" means a molded rubber component which, when bonded to a tire casing, includes that portion of the tire that comes into contact with the road when the tire is normally inflated and under normal load.

"Tread element" or "traction element" means a rib or a block element.

"Tread width" means the arc length of the tread surface in a plane including the axis of rotation of the tire.

"Turnup end" means the portion of a carcass ply that turns upward (i.e., radially outward) from the beads about which the ply is wrapped.

"Ultra tensile steel (UT)" means a carbon steel with a tensile strength of at least 4000 MPa at 0.20 mm filament diameter.

"Vertical deflection" means the amount that a tire deflects under load.

"Yarn" is a generic term for a continuous strand of textile fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

"Zigzag belt reinforcing structure" means at least two layers of cords or a ribbon of parallel cords preferably having 1 to 20 cords in each ribbon and laid up in an alternating pattern extending at an angle between 3 degrees and 40 degrees between lateral edges of the belt layers.

### Summary of the Invention

The invention relates to a tire in accordance with claim 1.

Dependent claims refer to preferred embodiments of the invention.

A preferred example provides a pneumatic tire comprising a tread; a carcass positioned radially inward of the tread and comprising a carcass ply having a first concave portion; a belt structure positioned radially inward of the tread and radially outward of the carcass and comprising a belt ply having a second concave portion; wherein a radial distance (d₁) is constant between the carcass ply and the belt ply, including the first and second concave portions, respectively.

Another preferred example provides a pneumatic tire comprising a tread; a carcass positioned radially inward of the tread and comprising a carcass ply having a first concave portion; a belt structure positioned radially inward of the tread and radially outward of the carcass and comprising a belt ply having a second concave portion; wherein a radial distance d₁ is constant between the carcass ply and the belt ply, including the first and second concave portions, respectively, and is in a range of from 0.76 mm (0.030 inches) to 2.29 mm (0.090 inches) or in a range of from 1 mm to 1.5 mm. In a preferred example, the radial distance d₁ is 1,27 mm (0.050 inches) or is in a range of from 1.25 mm to 1.30 mm.

### Brief Description of the Drawings

The accompanying figures, which are incorporated in and constitute a part of the specification, illustrate an example of a radial aircraft tire, and are used merely to illustrate such exemplary radial aircraft tire.
FIG. 1 is a cross-sectional view of an example of a tire according to the present invention.
FIG. 2 is an enlarged cross-sectional view of a part of the example tire shown in of FIG. 1.
FIG. 3 is a cross-sectional view of the example tire shown in of FIG. 1.
FIG. 4 is an enlarged cross-sectional view of a part of the example tire shown in of FIG. 3.

### Detailed Description of Preferred Embodiments of the Invention

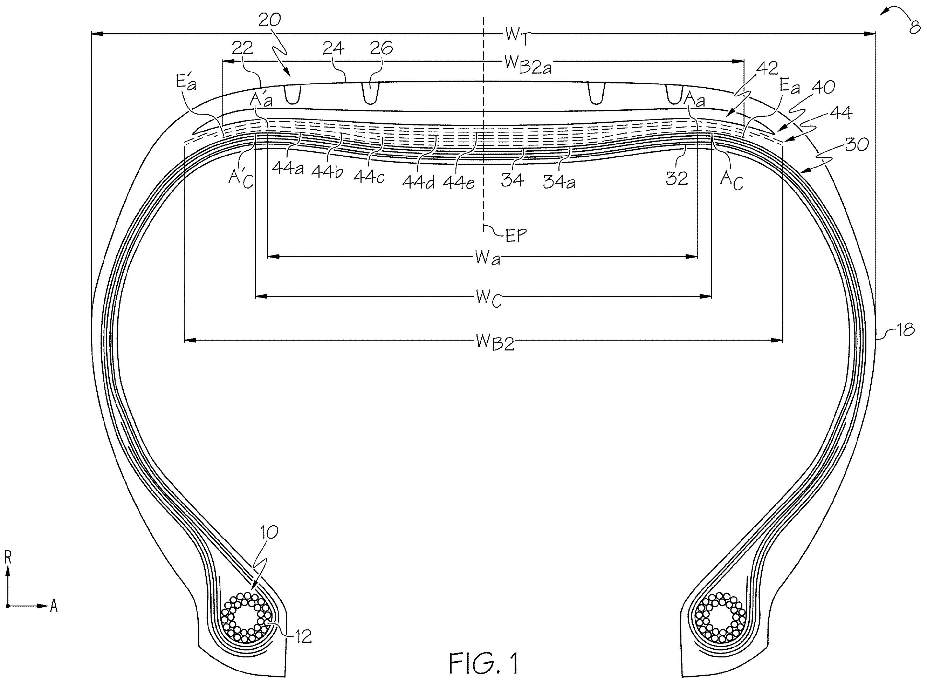

In order to more easily understand the present invention, FIGS. 1-4 have been depicted in a simplified form and not to scale. FIG. 1 shows a cross-sectional view of a radial aircraft tire 8 according to one example of the present invention. The tire 8 is inflated to a pressure equal to 10% of its rated inflation pressure, as recommended, for example, by the Tire and Rim Association (TRA), mounted on a rim, and unloaded. The tire 8 is preferably symmetrical about the equatorial plane (EP). The tire 8 also comprises a pair of bead portions 10 each containing a bead 12 embedded therein.

The tire 8 further comprises a sidewall portion 18 extending substantially radially outward from each of the bead portions 10 to a tread portion 20. The tread portion 20 extends axially between radially outer ends of the sidewall portions 18. The tread portion 20 further has a radially outer tread surface 22 having a ground contacting portion. In one example, shown in FIG. 1, under the conditions above, the ground contacting portion of the tread surface 22 is convex. In another example, the ground contacting portion of the tread surface 22 is preferably substantially parallel to the axial direction of the tire 8. The tread portion 20 preferably also has one or more circumferential ribs 24 defined by one or more circumferential grooves 26. While the tread portion 20 may have any number of circumferential ribs 24 and circumferential grooves 26, the tire 8 as shown in FIG. 1 has five circumferential ribs 24 defined by four circumferential grooves 26.

Furthermore, the tire 8 is reinforced with a carcass 30 toroidally extending from one bead portion 10 to the other bead portion 10, and which is preferably symmetrical about the equatorial plane (EP). The carcass 30 preferably comprises a plurality of carcass plies. In the tire 8 of FIG. 1, the carcass 30 includes a plurality of inner carcass plies 32 and a plurality of outer carcass plies 34, wherein the plurality of inner carcass plies 32 are positioned radially inward relative to the plurality of outer carcass plies 34. The plurality of inner carcass plies 32 are preferably wound around the bead portion 10 from an axially inner side of the tire 8 toward an axially outer side thereof to form turnup portions, while the plurality of outer carcass plies 34 are preferably extended radially downward to the bead portion 10 along the outside of the turnup portion of the inner carcass plies 32. Each of the plurality of inner and outer carcass plies 32, 34 is formed by calendared sheets of reinforcements. Typically, such a ply is made in a calendar in which a plurality of essentially parallel reinforcement cords are coated from both sides with a layer or sheet of rubber composition.

The cords of the inner and outer carcass plies 32, 34 are preferably oriented either substantially perpendicular to the equatorial plane (EP) of the tire 8 or at an angle relative to the equatorial plane (EP) of the tire 8. In one example, the cords are arranged perpendicularly to the equatorial plane (EP) of the tire 8. In another example, the cords are arranged in a range of 80 degrees to 90 degrees relative to the equatorial plane (EP) of the tire 8. In a further example, the cords are arranged in a range of 82 degrees to 90 degrees relative to the equatorial plane (EP) of the tire 8.

Also, the cords of the inner and outer carcass plies 32, 34 are any of a variety of materials and constructions. In one example, the cords of the inner and outer carcass plies 32, 34 are nylon cords. In another preferred example, the cords of inner and outer carcass plies 32, 34 are nylon-6,6 cords. In a further preferred example, the cords of the inner and outer carcass plies 32, 34 are nylon-6,6 cords having a 2100 dtex/2/2 construction. In an additional preferred example, the cords of the inner and outer carcass plies 32, 34 are an aramid and nylon cord structure, for example, a hybrid cord, a high energy cord, or a merged cord. Examples of suitable cords are described in U.S. Pat. App. Pub. No. 2024/0051344. Also, the cords of the calendared ply sheet preferably have a lateral density, wherein such lateral density is in a range of 12 to 30 ends per inch when measured from the calendaring machine or directly under the bead 12.

In the tire 8 of FIG. 1, the carcass 30 preferably includes three inner carcass plies 32 and two outer carcass plies 34. The present invention is not limited to this number or configuration of inner and outer plies, however, and may include one or more inner and outer carcass plies. The outer carcass ply 34a is the radially outermost carcass ply and comprises a concave portion. The concave portion of the outer carcass ply 34a extends between two axial boundaries A_{C}, A'_{C}, which are preferably symmetrical about either side of equatorial plane (EP). Nonetheless, the present invention is not limited to this configuration, and the axial boundaries A_{C}, A'_{C} may be asymmetrical about the equatorial plane (EP). An axial width W_{C} of the concave portion is the axial distance between the axial boundaries A_{C}, A'_{C} of the concave portion of the outer carcass ply 34a. The axial boundaries A_{C}, A'_{C} of the concave portion of the outer carcass ply 34a are the radially outermost boundaries of the outer carcass ply 34a. The outer carcass ply 34a further comprises two convex portions axially on the outside of the concave portion. These convex portions are respectively axially bounded on the inside by the axial boundaries A_{C}, A'_{C} of the concave portion and axially on the outside by terminal ends of the outer carcass ply 34a.

The other outer carcass plies 34 and inner carcass plies 32 preferably have a similar or the same construction to the outer carcass ply 34a, including a concave portion that extends between two axial boundaries and two convex portions axially on the outside of the concave portion as described above.

The tire 8 is further reinforced with a belt structure 40 arranged radially between the carcass 30 and the tread portion 20. In one preferred example, the belt structure 40 is symmetrical about the equatorial plane (EP). In another example, the belt structure 40, or at least a portion of the belt structure 40, is asymmetrical about the equatorial plane (EP). The belt structure 40 preferably includes a first belt layer 42 and a second belt layer 44. The first belt layer 42 is positioned radially outward of the second belt layer 44. The first belt layer 42 and the second belt layer 44 are each comprised of one or more belt plies, which are one of a low angle or spiral belt ply, a zigzag belt ply, a combination of spiral and zigzag belt plies. Examples of a belt for use in the tire 8 of the present invention is shown in U.S. Pat. Pub. No. 2008/0105352A1 and U.S. Pat. No. 11,186,122.

Regarding any low angle or spiral belt ply of the belt structure 40, in one example, any such belt ply has cords arranged at an angle in a range of 0 degrees to 20 degrees relative to the equatorial plane (EP). In another example, any low angle or spiral belt ply of the belt structure 40 has cords arranged at an angle in a range of 0 degrees to 15 degrees relative to the equatorial plane (EP). In a further example, any low angle or spiral belt ply of the belt structure 40 has cords arranged at an angle of 5 degrees or less relative to the equatorial plane (EP). In a still further example, any low angle or spiral belt ply of the belt structure 40 has cords arranged at an angle of 3 degrees or less relative to the equatorial plane (EP).

Regarding any zigzag belt ply of the belt structure 40, in one example, any such zigzag belt ply has cords arranged at an angle of 3 degrees to 40 degrees with respect to the equatorial plane (EP) and extending in alternation to turnaround points at each lateral edge of the belt structure 40. **In** another example, any zigzag belt ply of the belt structure 40 has cords arranged at an angle of 5 degrees to 40 degrees with respect to the equatorial plane (EP) and extending in alternation to turnaround points at each lateral edge of the belt structure 40. In a further example, any zigzag belt ply of the belt structure 40 has cords arranged at an angle of 6 degrees to 30 degrees with respect to the equatorial plane (EP) and extending in alternation to turnaround points at each lateral edge of the belt structure 40.

The belt plies of the first and second belt layers 42, 44 are preferably formed by a continuous rubberized strip that is wound circumferentially about the tire 8. The second belt layer 44 is first spirally wound onto the carcass 30, and then, the first belt layer 42 is spirally wound onto the second belt layer 44. The rubberized strip may be wound continuously to form both the second belt layer 44 and the first belt layer 42. The rubberized strip of the first and second belt layers 42, 44 is preferably reinforced with multiple embedded preferably high modulus and inextensible reinforcement cords. The cords within the rubberized strip are substantially parallel relative to one another. The cords are one or more of nylon, rayon, polyester, aramid, glass, or metal disposed spatially with a substantially parallel arrangement relative to one another and covered by an elastomer matrix, such as a cured rubber casing. Examples of suitable cords and strips of one or more reinforcement cords are also described in U.S. Pat. No. 4,893,665, U.S. Pat. No. 4,155,394 or U.S. Pat. No. 6,799,618.

In one preferred example, the cords of the rubberized strip that form the belt plies of the first and second belt layers 42, 44 are of an aramid and nylon cord structure, for example, an aramid and nylon hybrid cord or merged cord. In another preferred example, the cords of the rubberized strip are an aramid and a nylon 6,6 hybrid cord structure. In a further preferred example, the cords of the rubberized strip are an aramid and a nylon 6,6 hybrid cord structure, wherein the aramid cords have a 3300 dtex/1 construction and the nylon 6,6 cords have a 1880 dtex/1 construction, wherein the hybrid cord has a (3300 dtex/1 + 3300 dtex/1 + 1880 dtex/1)3 construction or a (6.7 + 6.7 + 4.5)/6.7 construction. The cords of the rubberized strip preferably also have a lateral density in a range of 12 to 30 ends per 2.54 cm (2.54 cm = 1 inch). In addition, the strip has a gauge or thickness in a range of 1 mm to 2 mm.

In the tire 8 of FIG. 1, the first belt layer 42 includes four belt plies. However, the first belt layer 42 is not limited to this number and may include any number of belt plies. In one example, the first belt layer 42 comprises four zigzag belt plies. In another example, the first belt layer 42 comprises four spiral belt plies. In a further example, the first belt layer 42 comprises four belt plies of a combination of spiral belt plies and zigzag belt plies.

Moreover, the belt plies of the first belt layer 42 include one or any combination of belt constructions, including concave, convex, and substantially parallel (or parallel) to the axial direction of the tire 8. In one example, at least one belt ply of the first belt layer 42 is convex and has an axial width. The at least one belt ply of the first belt layer 42 is convex along the axial width. In another example, at least one belt ply of the first belt layer 42 is convex and has a substantially parallel portion with convex axial outer ends. The substantially parallel portion of the at least one belt ply is preferably oriented symmetrically about either side of the tire equatorial plane (EP) and extends between two axial boundaries, which are also oriented preferably symmetrically about either side of the tire equatorial plane (EP). An axial width of substantially parallel portion is the axial distance between such axial boundaries of the substantially parallel portion. The at least one belt ply transitions from the substantially parallel portion to two convex portions starting at the axial boundaries to terminal ends of the at least belt ply. That is, the convex portions are respectively axially bounded on the inside by the axial boundaries of the substantially parallel portion and axially on the outside by the terminal ends of the at least one belt ply of the first belt layer 42. In a further example, at least one belt ply of the first belt layer 42 is substantially parallel to the axial direction of the tire 8. In a further example, at least one belt ply of the first belt layer 42 is concave. In any of the foregoing examples, the belt plies of the first belt layer 42 may be symmetrical or asymmetrical about the equatorial plane (EP).

Also, in the tire 8 of FIG. 1, the second belt layer 44 preferably includes five belt plies 44a, 44b, 44c, 44d, 44e, wherein belt ply 44a is the radially innermost belt ply and belt ply 44e is the radially outermost belt ply of the second belt layer 44. However, the second belt layer 44 is not limited to this number and may include any number of belt plies. In one example, the second belt layer 44 comprises five spiral belt plies. In a further example, the second belt layer 44 comprises five zigzag belt plies. In another example, the second belt layer 44 comprises five belt plies of a combination of spiral belt plies and zigzag belt plies.

Moreover, at least one of the belt plies 44a, 44b, 44c, 44d, 44e of the second belt layer 44 comprises a concave portion. In the tire 8 of FIG. 1, the belt ply 44a of the second belt layer 44 is the radially innermost belt ply and comprises a concave portion. The belt ply 44a has an axial width W_{B2a} having axial endpoints Eₐ, E'ₐ. In one preferred example, the axial width W_{B2a} is at least equal to two-thirds of an axial width W_{T} of the tire 8, wherein the axial width W_{T} is measured at the sidewalls, with the tire mounted on the rim and inflated to a pressure equal to 10% of its rated inflation pressure. In another example, the axial width W_{B2a} of belt ply 44a is in a range of 70% to 100% of the widest belt of the belt structure 40. In a further preferred example, the axial width W_{B2a} of belt ply 44a is in a range of 90% to 95% of the widest belt of the belt structure 40.

The concave portion of the belt ply 44a extends between two axial boundaries Aₐ, A'ₐ, which are preferably symmetrical about either side of the tire equatorial plane (EP). However, the present invention is not limited to this configuration, and the axial boundaries Aₐ, A'ₐ may be asymmetrical about either side of the equatorial plane (EP). An axial width Wₐ of the concave portion is the axial distance between the axial boundaries (Aₐ, A'ₐ) of the concave portion of the belt ply 44a. The axial boundaries Aₐ, A'ₐ of the concave portion of the belt ply 44a are the radially outermost boundaries of the belt ply 44a. The belt ply 44a further preferably comprises two convex portions axially on the outside of the concave portion. These convex portions are respectively axially bounded on the inside by the axial boundaries Aₐ, A'ₐ of the concave portion and axially on the outside by the axial endpoints Eₐ, E'ₐ of the belt ply 44a.

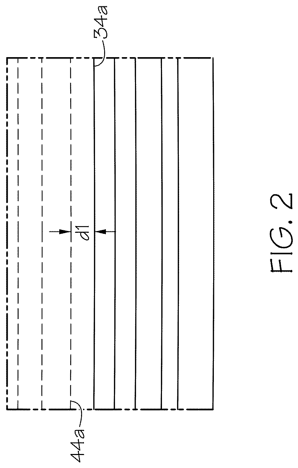

Also, as shown in FIGS. 1 and 2, the radially outermost carcass ply 34a and the radially innermost belt ply 44a are positioned a substantially constant at a radial distance d₁ or constant at a radial distance d₁ apart from one another. Substantially constant means at a radial distance d₁ +/- 10% of d₁. That is, the radially outermost carcass ply 34a and the radially innermost belt ply 44a are preferably spaced the radial distance d₁ apart from one another along the axial width W_{B2a} of the belt ply 44a from one axial endpoint Eₐ, E'ₐ to the other of the belt ply 44a. Thus, the radial distance d₁ between the radially outermost carcass ply 34a and the radially innermost belt ply 44a, including their respective concave portions, does not substantially change or change. In one example, the radial distance d₁ is in a range of 0.76 mm (0.030 inches) to 2.29 mm (0.090 inches). In another example, the radial distance d₁ is 1,27 mm (0.050 inches), or the radial distance d₁ is within a range of from 1 mm to 1.5 mm.

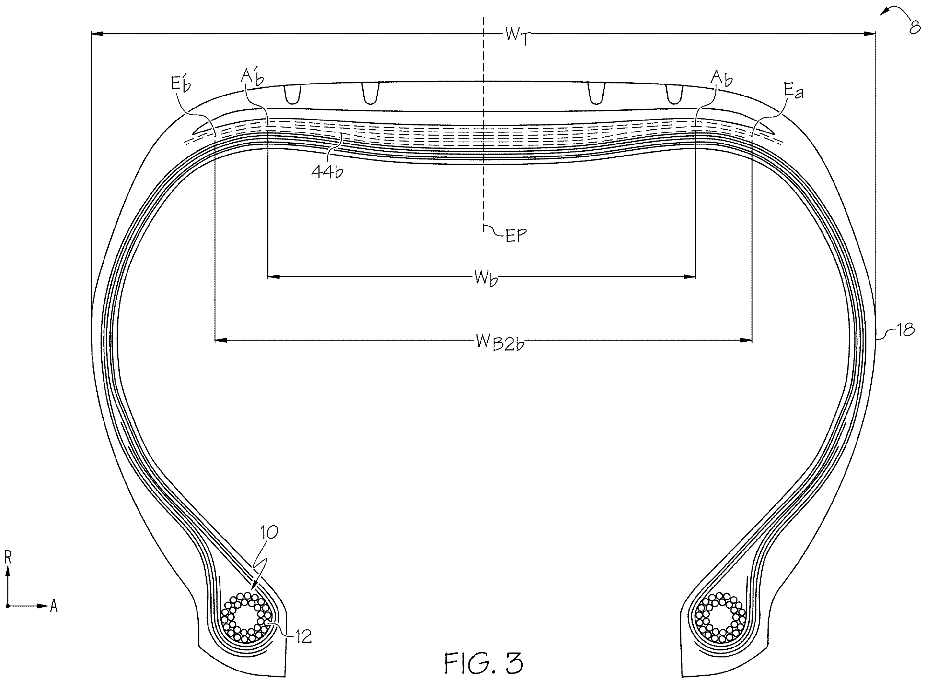

Also in the tire 8, as shown in FIG. 3, the belt ply 44b is the second radially innermost belt ply and preferably comprises a concave portion. The belt ply 44b has an axial width W_{B2b} having axial endpoints E_{b}, E'_{b}. In one example, the axial width W_{B2b} is at least equal to two-thirds of the axial width W_{T} of the tire 8 and is greater than the axial width W_{B2a} of the belt ply 44a.

The concave portion of the belt ply 44b extends between two axial boundaries A_{b}, A'_{b}, which are preferably symmetrical about either side of the tire equatorial plane (EP). However, the present invention is not limited to this configuration, and the axial boundaries A_{b}, A'_{b} may be asymmetrical about either side of the equatorial plane (EP). An axial width W_{b} of the concave portion is the axial distance between the axial boundaries A_{b}, A'_{b} of the concave portion of the belt ply 44b. The axial boundaries A_{b}, A'_{b} of the concave portion of the belt ply 44b are also the radially outermost boundaries of the belt ply 44b. The belt ply 44b further comprises preferably two convex portions axially on the outside of the concave portion. These convex portions are respectively axially bounded on the inside by the axial boundaries A_{b}, A'_{b} of the concave portion and axially on the outside by the axial endpoints E_{b}, E'_{b} of the belt ply 44b.

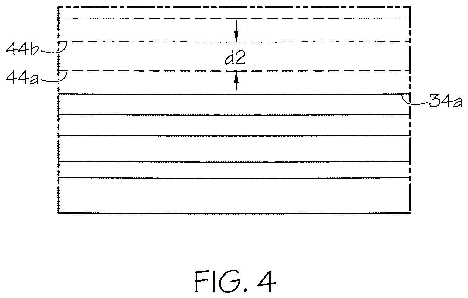

As illustrated in FIGS. 3 and 4, the belt ply 44a and the belt ply 44b are positioned a substantially constant or constant radial distance d₂ apart from one another. Substantially constant means at a radial distance d₂ +/- 10% of d₂. That is, the belt ply 44a and the belt ply 44b are preferably spaced the radial distance d₂ apart from one another along the axial width W_{B2a} of the belt ply 44a from one axial endpoint Eₐ, E'ₐ to the other of the belt ply 44a. Thus, the radial distance d₂ between the belt ply 44a and the belt ply 44b, including their respective concave portions, does not substantially change or change. In one example, the radial distance d₂ is in a range of 0.76 mm (0.030 inches) to 2.29 mm (0.090 inches). In another example, the radial distance d₂ is 1,27 mm (0.050 inches) or is in a range of from 1 mm to 1.5 mm.

Similarly, by virtue of the radially outermost carcass ply 34a and the radially innermost belt ply 44a being parallel, and the belt ply 44a and the belt ply 44b being parallel, the radially outermost carcass ply 34a and the belt ply 44b are also parallel, or positioned at a substantially constant or constant radial distance apart from one another.

Further, in the tire 8 of FIG. 1, the other of the belt plies 44c, 44d, 44e of the second belt layer 44 are preferably convex or substantially parallel (or parallel) to the axial direction of the tire 8. Specifically, the belt plies 44c, 44d, 44e are convex. However, the belt plies 44c, 44d, 44e of the second belt layer 44 are not limited to the foregoing constructions and may include one or any combination of belt constructions, including concave, convex, and substantially parallel (or parallel) to the axial direction of the tire 8. In any of the foregoing examples, each of the belt plies of the second belt layer 44 are one of symmetrical and asymmetrical about the equatorial plane (EP).

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. Also, to the extent that the terms "in" or "into" are used in the specification or the claims, it is intended to additionally mean "on" or "onto." To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. To the extent that the term "substantially" is used in the specification or the claims, it is intended to mean that the identified components have the relation or qualities indicated with degree of error as would be acceptable in the subject industry. As used in the specification and the claims, the singular forms "a," "an," and "the" include the plural.

## Claims

1. A pneumatic tire comprising a tread (12), a carcass (30) positioned radially inward of the tread (12) and comprising a carcass ply (34a) having a first concave portion, a belt structure (40) positioned radially inward of the tread (12) and radially outward of the carcass (30) and comprising a belt ply (44a) having a second concave portion, wherein a radial distance (d₁) is constant or substantially constant between the carcass ply (34a) and the belt ply (44a), including the first and second concave portions, respectively.

2. The pneumatic tire of claim 1, wherein the radial distance (d₁) is in a range of from 0.76 mm to 2.29 mm.

3. The pneumatic tire of claim 1, wherein the radial distance (d₁) is in a range of from 1 mm to 1.5 mm.

4. The pneumatic tire of claim 1, wherein the radial distance (d₁) is 1.27 mm

5. The pneumatic tire of at least one of the previous claims, wherein the belt ply (44a) comprises a spiral belt ply having cords arranged in a range of 0 degrees to 15 degrees relative to an equatorial plane (EP) of the pneumatic tire (8), and/or wherein the cords of the belt ply (44a) have a hybrid construction.

6. The pneumatic tire of at least one of the previous claims, wherein the carcass ply (34a) has cords arranged perpendicularly to an equatorial plane (EP) of the pneumatic tire (8), and/or wherein the cords of the carcass ply (34a) are nylon-6,6 cords preferably having a 2100 dtex/2/2 construction.

7. The pneumatic tire of at least one of the previous claims, wherein the carcass ply (34a) and the belt ply (44a) are parallel along an axial width (W_{B2a}) of the belt ply (44a).

8. The pneumatic tire of at least one of the previous claims, wherein the belt structure (40) further comprises a zigzag belt ply that is radially outward of the belt ply (44a) having cords preferably arranged at an angle of 3 degrees to 40 degrees with respect to an equatorial plane (EP) of the pneumatic tire (8) and extending in alternation to turnaround points at each lateral edge of the belt structure (40).

9. The pneumatic tire of at least one of the previous claims, wherein the belt structure (40) comprises a second belt ply (44b) that is radially outward of the belt ply (44a).

10. The pneumatic tire of claim 9, wherein the second belt ply (44b) is a spiral belt ply having cords preferably arranged in a range of 0 degrees to 15 degrees relative to an equatorial plane (EP) of the pneumatic tire (8).

11. The pneumatic tire of claim 9 or 10, wherein the second belt ply (44b) has a third concave portion.

12. The pneumatic tire of at least one of the previous claims, wherein a radial distance (d₂) is constant or substantially constant between the belt ply (44a) and the second belt ply (44b), including the second and third concave portions, respectively.

13. The pneumatic tire of at least one of the previous claims, wherein a radial distance (d₃) is constant or substantially constant between the carcass ply (34a) and the second belt ply (44b), including the first and third concave portions, respectively.

14. The pneumatic tire of claim 12 or 13, wherein the radial distance (d₂) between the belt ply (44a) and the second belt ply is in a range of from 0.76 mm to 2.29 mm or in a range of from 1 mm to 1.5 mm such as 1.27 mm.

15. The pneumatic tire of at least one of the previous claims, wherein the tire (8) is an aircraft tire, preferably a radial aircraft tire.
